# EUROPEAN PATENT APPLICATION

(11) **EP 0 881 043 A1**
(43) Date of publication of application: **02.12.1998**
(21) Application number: 97934766.3
(22) Date of filing: 11.08.1997
(51) Int. Cl.: B25J 9/06

(54) **TRANSFER ROBOT**

(30) Priority: 13.08.1996 JP 213643/96
(71) Applicant: Itagaki, Yasuhito, Fuchu-shi, Tokyo 182-0021 (JP)
(72) Inventor: Itagaki, Yasuhito, Fuchu-shi, Tokyo 182-0021 (JP)
(74) Representative: Modiano, Guido, Dr.-Ing.
(86) International application number: JP9702807
(87) International publication number: WO9806544

(57) **Abstract**

A transfer robot has a base column rotatably supported by a support plate. A common frame is mounted on the base column. A left handler is constituted by a first beam portion of the common frame, a first intermediate arm, a first distal arm, a first hand, and so forth. The left handler is controlled such that its expansion and contraction direction is set by a common motor and it is driven to expand and contract by the common motor and a first motor. A right handler is constituted by a second beam portion of the common frame, a second intermediate arm, a second distal arm, a second hand, and so forth. The right handler is controlled such that its expansion and contraction direction is set by the common motor and it is driven to expand and contract by the common motor and a second motor.

## Description

### Technical Field

The present invention relates to a transfer robot, and particularly to a transfer robot of the double-hand type suitable for semiconductor processes, in which a target object, such as a semiconductor wafer or a liquid crystal display (LCD) substrate, needs to be handled in a vacuum atmosphere.

### Background Art

A transfer robot is employed to transfer a target object, such as a semiconductor wafer or an LCD substrate, in or to a processing apparatus, such as a chemical vapor deposition (CVD) apparatus, a diffusion apparatus, or a resist-coating apparatus. Such a transfer robot is required to accurately move while keeping a high throughput. Particularly, a transfer robot installed in a vacuum atmosphere, such as the inside of a load lock chamber, is further required to be compact and to keep a clean environment.

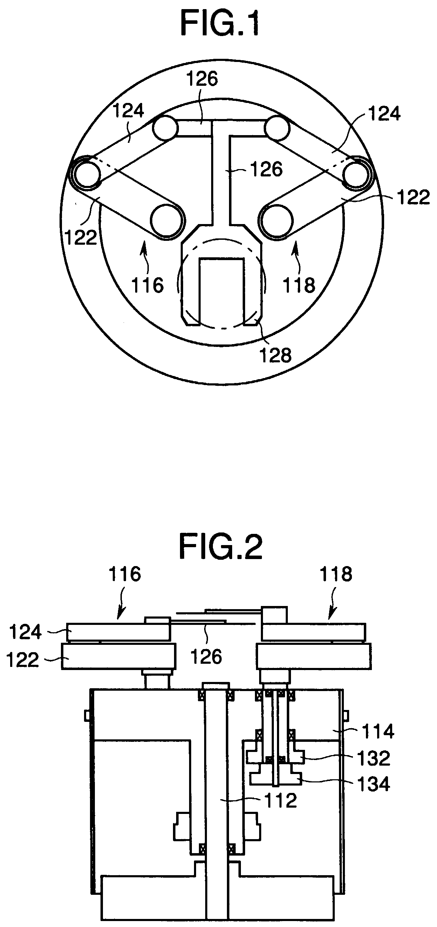

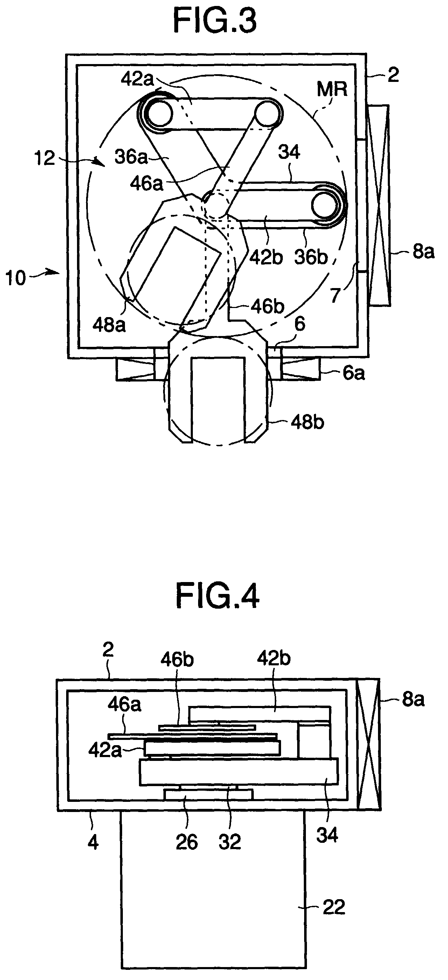

FIGS. 1 and 2 are a plan view and a partially cross-sectional side view, respectively, showing a conventional transfer robot of the typical double-hand type employed in transferring a semiconductor wafer.

In this transfer robot, first and second handlers 116 and 118 are line-symmetrically arranged on a support plate 114, which is rotatable about a shaft 112. Each of the handlers 116 and 118 has a multi-arm structure formed of a combination of a proximal arm 122, an intermediate arm 124, and a distal arm 126, pivotally connected to each other. A hand 128 is arranged at the free end of the distal arm 126, for mounting a semiconductor wafer W thereon. The proximal arm 122 is driven through a hollow shaft 132 extending downward below the support plate 114, while the intermediate and distal arms 124 and 126 are driven through a shaft 134 extending in the hollow shaft 132.

The conventional transfer robot shown in FIGS. 1 and 2 has five rotational axes extending through the support plate 114, i.e., one axis for the support plate 114, two axes for the proximal arms 122 of the first and second handlers 116 and 118, and two axes for the intermediate arms 124 and the distal arms 126 of the first and second handlers 116 and 118. Accordingly, for example, where the transfer robot is used in a vacuum atmosphere, it is necessary to arrange airtight seal structures, such as magnetic fluid seals, respectively at the axes, and mount the seal structures on the support plate 114, which is to be rotated itself. For this reason, using the transfer robot in a vacuum atmosphere raises problems in light of space and cost, and further entails less reliability in keeping a clean environment in the vacuum atmosphere.

### Disclosure of Invention

The present invention has been made in view of the above problems, and has as its object to provide a compact and inexpensive transfer robot which is suitable for use in a vacuum atmosphere.

According to a first aspect of the present invention, there is provided a transfer robot comprising:
a base column extending through a support plate and rotatably supported by the support plate;
a common frame mounted on the base column;
first and second intermediate arms rotatably connected to the common frame respectively through first and second intermediate axial structures for transmitting driving force;
first and second distal arms rotatably connected to free ends of the first and second intermediate arms respectively through first and second distal axial structures for transmitting driving force;
first and second driving shafts for transmitting driving force, rotatably supported by the base column to reach the common frame through the base column;
first and second upstream transmission means arranged in the common frame, for transmitting driving force between the first driving shaft and the first intermediate axial structure, and between the second driving shaft and the second intermediate axial structure, respectively;
first and second downstream transmission means arranged in the first and second intermediate arms, respectively, for transmitting driving force between the first intermediate axial structure and the first distal axial structure, and between the second intermediate axial structure and the second distal axial structure, respectively;
a common driving source connected to the base column, for driving the common frame to rotate through the base column;
a first driving source supported by the base column and connected to the first driving shaft, for driving the first intermediate arm and the first distal arm to rotate; and
a second driving source supported by the base column and connected to the second driving shaft, for driving the second intermediate arm and the second distal arm to rotate.

With this arrangement, the support plate for supporting a handling section is fixed, and the number of rotational axes extending through the support plate is three. Accordingly, the present robot can be compact and can be manufactured inexpensively, as compared to a conventional structure which has a rotatable support plate and five rotational axes. Particularly, these features are advisable when the transfer robot is used in a vacuum atmosphere. In other words, the present invention can provide a compact and inexpensive transfer robot which is suitable for use in a vacuum atmosphere.

According to a second aspect of the present invention, there is provided a transfer robot in accordance with the above described transfer robot, wherein a distance between rotational axes of the common frame and the first intermediate arm, and a distance between rotational axes of the first intermediate arm and the first distal arm are equal to each other, and a distance between rotational axes of the common frame and the second intermediate arm, and a distance between rotational axes of the second intermediate arm and the second distal arm are equal to each other.

According to a third aspect of the present invention, there is provided a transfer robot in accordance with the transfer robot of the second aspect, wherein the distance between the rotational axes of the common frame and the first intermediate arm, and the distance between the rotational axes of the common frame and the second intermediate arm are equal to each other.

### Brief Description of Drawings

FIG. 1 is a plan view showing a conventional transfer robot for a semiconductor wafer;
FIG. 2 is a partially cross-sectional side view showing the conventional transfer robot for a semiconductor wafer;
FIG. 3 is a plan view showing a transfer robot for a semiconductor wafer, according to an embodiment of the present invention;
FIG. 4 is a side view of the transfer robot shown in FIG. 3;
FIG. 5 is a view showing the inside structure of the handling section of the transfer robot shown in FIG. 3;
FIG. 6 is a partially cross-sectional side view showing, in detail, the driving section of the transfer robot shown in FIG. 3; and
FIGS. 7A to 7R are views showing the steps of an operation of the transfer robot shown in FIG. 3, in order.

### Best Mode of Carrying Out the Invention

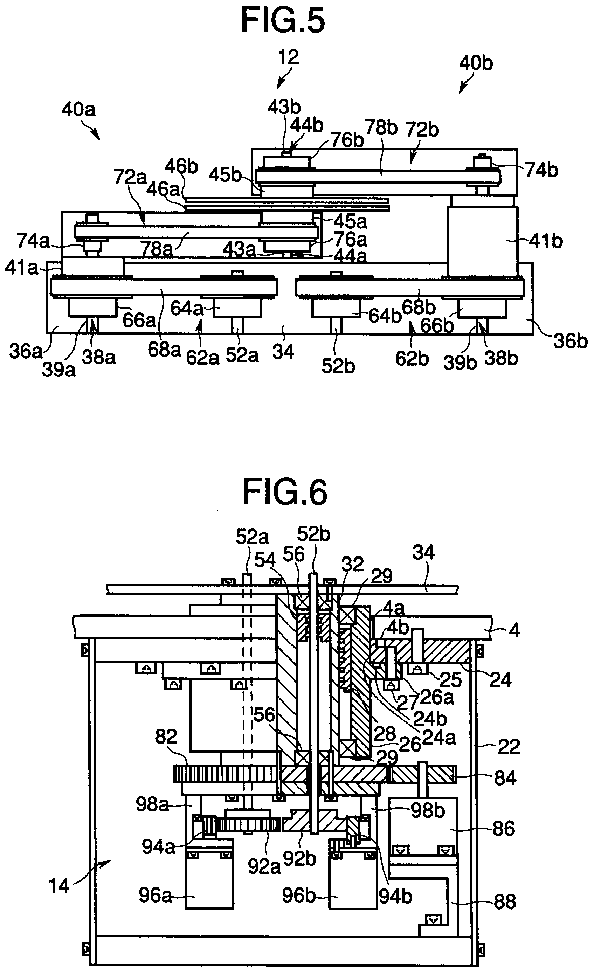

FIGS. 3 and 4 are a plan view and a side view, respectively, showing a transfer robot 10 of the double-hand type for a semiconductor wafer, according to an embodiment of the present invention. FIGS. 5 and 6 are a view showing the inside structure of a handling section 12, and a partially cross-sectional side view showing, in detail, a driving section 14, respectively, in the transfer robot 10.

The transfer robot 10 includes the handling section 12 arranged in a load lock chamber 2, which is capable of being set at a vacuum atmosphere, and the driving section 14 attached to the outside of the bottom wall 4 of the load lock chamber 2. The load lock chamber 2 is provided with two openings 6 and 8 in its side wall, which communicate with, for example, a vacuum processing chamber and an in/out unit (not shown), respectively. Gate valves 6a and 8a are arranged on the openings 6 and 8, so that airtightness in the load lock chamber 2 is ensured.

The driving section 14 is covered by a casing 22 whose ceiling plate functions as a support plate 24 for supporting the handling section 12. The support plate 24 is fixed to the bottom wall 4 of the load lock chamber 2 by screws 25. The bottom wall 4 and the support plate 24 are provided with circular openings 4a and 24a, respectively, which are aligned with each other. A cylindrical collar 26 is arranged in the openings 4a and 24a such that its axial direction is vertical. The collar 26 has a flange portion 26a, with which it is fixed to the bottom surface of the support plate 24 by screws 27 or the like. An O-seal ring 4b is arranged on the support plate 24 to surround the opening 4a, and an O-seal ring 24b is arranged on the flange portion 26a of the collar 26 to surround the opening 24a, so that airtightness in the load lock chamber 2 is ensured.

A base column 32 is coaxially arranged in the collar 26. The base column 32 is rotatably supported in the collar 26 by bearings 29. A magnetic fluid seal 28 is arranged between the collar 26 and the base column 32, so that airtightness in the load lock chamber 2 is ensured.

A common frame 34 is fixed to the top of the base column 32 projecting from the collar 26 and is arranged to be parallel to the base wall 4 of the load lock chamber 2. The common frame 34 is formed of a casing which has a substantially closed inner space and a bent shape like a boomerang with first and second beam portions 36a and 36b in plan view. The first and second beam portions 36a and 36b are arranged to form an angle of 120° therebetween. Note that, since the common frame 34 needs only to rotate about its axis above the support plate 24, the frame 24 may have a shape, such as a circular shape, which has no narrow portions, such as the beam portions.

First and second intermediate arms 42a and 42b are respectively connected to the free ends of the first and second beam portions 36a and 36b, through first and second intermediate axial structures 38a and 38b vertically directed for transmitting driving force, such that the intermediate arms 42a and 42b are parallel to each other and are rotatable. Each of the intermediate arms 42a and 42b is also formed of a casing which has a substantially closed inner space.

The first and second intermediate axial structures 38a and 38b respectively have core shafts 39a and 39b fixed to the first and second beam portions 36a and 36b, and hollow shafts 41a and 41b fixed to the first and second intermediate arms 42a and 42b. The top ends of the core shafts 39a and 39b are rotatably connected to the first and second intermediate arms 42a and 42b, respectively. The bottom ends of the hollow shafts 41a and 41b are rotatably connected to the first and second beam portions 36a and 36b, respectively. The hollow shafts 41a and 41b are mounted on the core shafts 39a and 39b to be coaxial and rotatable by inside bearings.

First and second distal arms 46a and 46b are respectively connected to the free ends of the first and second intermediate arms 42a and 42b, through first and second distal axial structures 44a and 44b vertically directed for transmitting driving force, such that the distal arms 46a and 46b are parallel to each other and are rotatable. The first and second distal axial structures 44a and 44b respectively have core shafts 43a and 43b fixed to the first and second intermediate arms 42a and 42b, and hollow shafts 45a and 45b fixed to the first and second distal arms 46a and 46b. The hollow shafts 45a and 45b are mounted on the core shafts 43a and 43b to be coaxial and rotatable by inside bearings.

The first distal arm 46a is connected above the first intermediate arm 42a while the second distal arm 46b is connected below the second intermediate arm 42b. First and second hands 48a and 48b for mounting a semiconductor wafer W are respectively formed at the free ends of the first and second distal arms 46a and 46b.

The first and second intermediate axial structures 38a and 38b have lengths different from each other, so that first and second hands 48a and 48b can move at positions close to each other without interference. More specifically, the second intermediate axial structure 38b is designed to separate the second intermediate arm 42b from the second beam 36b by a distance equal to or larger than the total height of the first intermediate arm 42a and the first distal arm 46a.

First and second driving shafts 52a and 52b for transmitting driving force are vertically arranged to reach the common frame 34 through the base column 32. The first and second driving shafts 52a and 52b are rotatably supported by the base column 32 with bearings 56 (only the second driving shaft 52b side is shown). A magnetic fluid seal 54 (only the second driving shaft 52b side is shown) is arranged between the base column 32 and each of the first and second driving shafts 52a and 52b, so that airtightness in the load lock chamber 2 is ensured.

First and second upstream transmission means 62a and 62b are respectively arranged in the first and second beam portions 36a and 36b of the common frame 34, for transmitting driving force between the first driving shaft 52a and the first intermediate axial structure 38a, and between the second driving shaft 52b and the second intermediate axial structure 38b. The first and second upstream transmission means 62a and 62b respectively include driving pulleys 64a and 64b having gears and fixed to the first and second driving shafts 52a and 52b; driven pulleys 66a and 66b having gears and fixed to the hollow shafts 41a and 41b of the first and second intermediate axial structures 38a and 38b; and timing belts 68a and 68b wound around the pulleys.

First and second downstream transmission means 72a and 72b are respectively arranged in the first and second intermediate arms 42a and 42b, for transmitting driving force between the first intermediate axial structure 38a and the first distal axial structure 44a, and between the second intermediate axial structure 38b and the second distal axial structure 44b. The first and second downstream transmission means 72a and 72b respectively include driving pulleys 74a and 74b having gears and fixed to the core shafts 39a and 39b of the first and second intermediate axial structures 38a and 38b; driven pulleys 76a and 76b having gears and fixed to the hollow shafts 45a and 45b of the first and second distal axial structures 44a and 44b; and timing belts 78a and 78b wound around the pulleys.

The first and second downstream transmission means 72a and 72b are designed such that rotation of the first and second intermediate arms 42a and 42b relative to the common frame 34, and rotation of the first and second distal arms 46a and 46b relative to the first and second intermediate arms 42a and 42b are caused in directions opposite to each other and at a rotation ratio of 2 : 1, by rotation of first and second driving shafts 52a and 52b. For example, when the first intermediate arm 42a is rotated relative to the common frame 34 counterclockwise by an angle of 60° , the first distal arm 46a is rotated relative to the first intermediate arm 42a clockwise by an angle of 30° . Specifically, the rotation ratio is set by selecting the gear ratio of the pulleys 74a and 74b on the first and second intermediate axial structures 38a and 38b side, to the pulleys 76a and 76b on the first and second distal axial structures 44a and 44b side.

A large diameter gear 82 is coaxially fixed to the bottom of the base column 32 projecting from the collar 26. The large diameter gear 82 engages with a small diameter gear 84 attached to the common motor 86, which is used as a common driving source. The common motor 86 is fixed via an attachment 88 to the bottom plate of the casing 22 covering the driving section 14. Accordingly, the common frame 34 can be driven to rotate relative to the support plate 24 by the common motor 86 through the base column 32.

Gears 92a and 92b are coaxially fixed to the bottom ends of the first and second driving shafts 52a and 52b, respectively, which penetrate the base column 32 and the large diameter gear 82 and project therefrom. The gears 92a and 92b respectively engage with pinions 94a and 94b attached to first and second motors 96a and 96b, i.e., first and second driving sources. The first and second motors 96a and 96b are fixed via attachments 98a and 98b to a circular plate 83 which is integrated with base column 32 and the large diameter gear 82.

Accordingly, the first and second motors 96a and 96b are moved integratedly with the base column 32 and the common frame 34. The first intermediate arm 42a and the first distal arm 46a can be rotated relative to the common frame 34 by the first motor 96a through the first driving shaft 52a. The second intermediate arm 42b and the second distal arm 46b can be rotated relative to the common frame 34 by the second motor 96b through the second driving shaft 52b.

In other words, a left handler 40a is constituted by the first beam portion 36a of the common frame 34, the first intermediate arm 42a, the first distal arm 46a, the first hand 48a, and so forth. The left handler 40a is controlled such that its expansion and contraction direction is set by the common motor 86 and it is driven to expand and contract by the common motor 86 and the first motor 96a. A right handler 40b is constituted by the second beam portion 36b of the common frame 34, the second intermediate arm 42b, the second distal arm 46b, the second hand 48b, and so forth. The right handler 40b is controlled such that its expansion and contraction direction is set by the common motor 86 and it is driven to expand and contract by the common motor 86 and the second motor 96b.

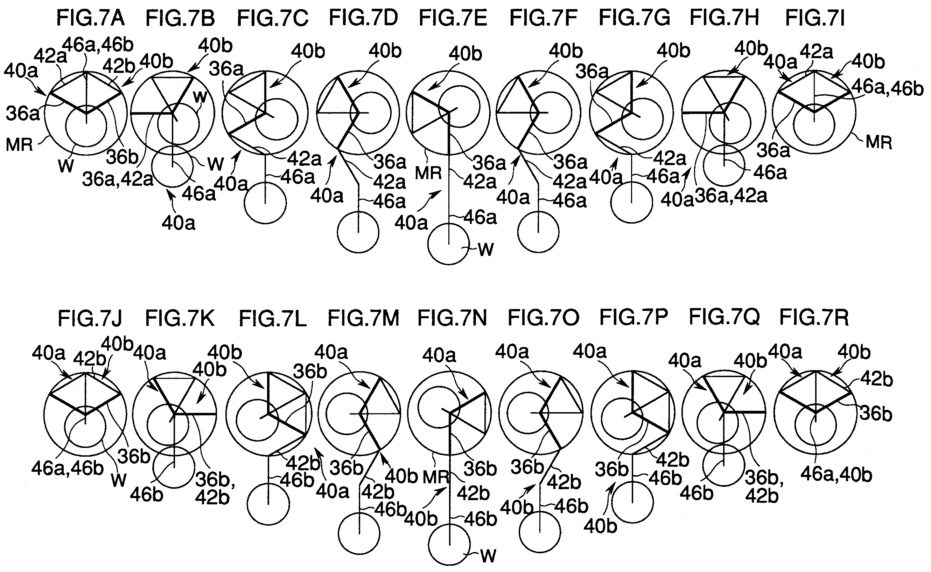

As shown in FIG. 3 or in FIGS. 7A to 7R described later, the left and right handler 40a and 40b are arranged substantially line-symmetrical in the shape of the transfer robot 10 viewed from above. More specifically, it is set to equalize all the distances between rotational axes of the common frame 34 and the first intermediate arm 42a, between rotational axes of the common frame 34 and the second intermediate arm 42b, between rotational axes of the first intermediate frame 42a and the first distal arm 46a, and between rotational axes of the second intermediate frame 42b and the second distal arm 46b. Accordingly, as shown in FIG. 7A, when the left and right handler 40a and 40b are in their initial states, i.e., neutral states, the rotational axes of the first beam portion 36a of the common frame 34, the first intermediate arm 42a, and the first distal arm 46a are located on the apexes of an equilateral triangle, and the rotational axes of the second beam portion 36b of the common frame 34, the second intermediate arm 42b, and the second distal arm 46b are also located on the apexes of an equilateral triangle.

An operation of the transfer robot 10 will be explained with reference to FIGS. 7A to 7R. In order to make the drawings simple and comprehensible, all the parts are schematically shown in the drawings, and an explanation is given on a case where wafers W are linearly transferred by the left and right handlers 40a and 40b, respectively. Hereinafter, rotational directions of the common motor 86 and the first and second motors 96a and 96b, for rotating the common frame 34 and the first and second intermediate arms 42a and 42b clockwise are indicated with a symbol [+], while rotational directions reverse thereto are indicated with a symbol [-].

The initial states, i.e., neutral states of the left and right handlers 40a and 40b are, in other words, states where the left and right handlers 40a and 40b are folded, i.e., the wafers W are furthest drawn. If the wafers W were to be drawn further, the intermediate arms of the left and right handlers 40a and 40b would jut out from a minimum pivot circle MR of the handling section 12, and thus would be in undesirable states.

In order to linearly move one wafer W forward by the left handler 40a from the state shown in FIG. 7A, the common motor 86 and the first motor 96a are rotated in the [-] and [+] directions, respectively, at an angular velocity ratio of 1 : 2. During this time, the second motor 96b for the right handler 40b is kept stopped.

The state shown in FIG. 7E, in which the first beam portion 36a, the first intermediate arm 42a, and the first distal arm 46a of the left handler 40a are linearly stretched, is reached by rotating the common motor 86 by an angle of -120° while rotating the first motor 96a by an angle of +240° from the state shown in FIG. 7A. FIGS. 7B to 7D show states reached, before the state shown in FIG. 7E, by rotating the common motor 86 by angles of -30° , -60° , and -90° , respectively, while rotating the first motor 96a by angles of +60° , +120° , and +180° , respectively.

Then, in order to linearly move the wafer W backward by the left handler 40a from the state shown in FIG. 7E, the common motor 86 and the first motor 96a are rotated in the [+] and [-] directions, respectively, at an angular velocity ratio of 1 : 2. During this time, the second motor 96b for the right handler 40b is kept stopped.

The state shown in FIG. 7I, in which the left handler 40a is folded, is reached by rotating the common motor 86 by an angle of +120° while rotating the first motor 96a by an angle of -240° from the state shown in FIG. 7E. FIGS. 7F to 7H show states reached, before the state shown in FIG. 7I, by rotating the common motor 86 by angles of +30° , +60° , and +90°, respectively, while rotating the first motor 96a by angles of -60° , -120° , and -180° , respectively.

Then, in order to linearly move the other wafer W forward by the right handler 40b from the initial state, i.e., neutral state, shown in FIG. 7J, the common motor 86 and the second motor 96b are rotated in the [+] and [-] directions, respectively, at an angular velocity ratio of 1 : 2. During this time, the first motor 96a for the left handler 40a is kept stopped.

The state shown in FIG. 7N, in which the second beam portion 36b, the second intermediate arm 42b, and the second distal arm 46b of the right handler 40b are linearly stretched, is reached by rotating the common motor 86 by an angle of +120° while rotating the second motor 96b by an angle of -240° from the state shown in FIG. 7J. FIGS. 7K to 7M show states reached, before the state shown in FIG. 7N, by rotating the common motor 86 by angles of +30° , +60° , and +90° , respectively, while rotating the second motor 96b by angles of -60° , -120° , and -180° , respectively.

Then, in order to linearly move the wafer W backward by the right handler 40b from the state shown in FIG. 7N, the common motor 86 and the second motor 96b are rotated in the [-] and [+] directions, respectively, at an angular velocity ratio of 1 : 2. During this time, the first motor 96a for the left handler 40a is kept stopped.

The state shown in FIG. 7R, in which the right handler 40b is folded, is reached by rotating the common motor 86 by an angle of -120° while rotating the second motor 96b by an angle of +240° from the state shown in FIG. 7N. FIGS. 7O to 7Q show states reached, before the state shown in FIG. 7R, by rotating the common motor 86 by angles of -30° , -60° , and -90° respectively, while rotating the second motor 96b by angles of +60° , +120° , and +180° , respectively.

In order to change the expansion and contraction direction of the left and right handlers 40a and 40b, only the motor 86 is activated while the first and second motor 96a and 96b are kept stopped. With this operation, the expansion and contraction direction can be set without expanding and contracting the left and right handlers 40a and 40b. Then, the left and right handlers 40a and 40b can be expanded and contracted to linearly transfer the wafers W in the set direction by performing the operations shown in FIGS. 7A to 7R.

Note that, although the above described embodiment is exemplified by a transfer robot for transferring semiconductor wafers as target substrates, the transfer robot 10 can be applied to handling various kinds of substrates, such as an LCD substrate, a CD disk, and a floppy disk, by modifying the shape of the free ends of the first and second distal arms 46a and 46b.

## Claims

1. A transfer robot comprising:
a base column extending through a support plate and rotatably supported by said support plate;
a common frame mounted on the base column;
first and second intermediate arms rotatably connected to said common frame respectively through first and second intermediate axial structures for transmitting driving force;
first and second distal arms rotatably connected to free ends of said first and second intermediate arms respectively through first and second distal axial structures for transmitting driving force;
first and second driving shafts for transmitting driving force, rotatably supported by said base column to reach said common frame through said base column;
first and second upstream transmission means arranged in said common frame, for transmitting driving force between said first driving shaft and said first intermediate axial structure, and between said second driving shaft and said second intermediate axial structure, respectively;
first and second downstream transmission means arranged in said first and second intermediate arms, respectively, for transmitting driving force between said first intermediate axial structure and said first distal axial structure, and between said second intermediate axial structure and said second distal axial structure, respectively;
a common driving source connected to said base column, for driving said common frame to rotate through said base column;
a first driving source supported by said base column and connected to said first driving shaft, for driving said first intermediate arm and said first distal arm to rotate; and
a second driving source supported by said base column and connected to said second driving shaft, for driving said second intermediate arm and said second distal arm to rotate.

2. A transfer robot according to claim 1, wherein a distance between rotational axes of said common frame and said first intermediate arm, and a distance between rotational axes of said first intermediate arm and said first distal arm are equal to each other, and a distance between rotational axes of said common frame and said second intermediate arm, and a distance between rotational axes of said second intermediate arm and said second distal arm are equal to each other.

3. A transfer robot according to claim 2, wherein the distance between the rotational axes of said common frame and said first intermediate arm, and the distance between the rotational axes of said common frame and said second intermediate arm are equal to each other.
